# EUROPÄISCHE PATENTSCHRIFT

(11) **EP 1 294 820 B1**
(45) Veröffentlichungstag und Bekanntmachung des Hinweises auf die Patenterteilung: **17.03.2004**
(21) Anmeldenummer: 01943519.7
(22) Anmeldetag: 18.06.2001
(51) Int. Cl.: C09J 7/00, B32B 3/04, B32B 7/06

(54) **MONTAGEKLEBEBAND ZUR VERBESSERTEN FUGENABDICHTUNG UND MONTAGEBANDDISPENSER**
INDUSTRIAL ADHESIVE TAPE FOR IMPROVED SEALING OF JOINTS AND AN INDUSTRIAL ADHESIVE TAPE DISPENSER
BANDE ADHESIVE DE MONTAGE POUR ETANCHEIFICATION DE JOINTS AMELIOREE, ET DISTRIBUTEUR DE BANDE DE MONTAGE

(30) Priorität: 27.06.2000 DE 10031214
(43) Veröffentlichungstag der Anmeldung: 26.03.2003
(73) Patentinhaber: Silu Verwaltung AG, 6045 Meggen (CH)
(72) Erfinder: SIEBER, Reto, CH-6019 Sigigen (CH); SIEBER, Marco, CH-6048 Horw (CH)
(74) Vertreter: Altenburg, Udo, Dipl.-Phys.
(86) Internationale Anmeldenummer: PCT/EP2001/006851
(87) Internationale Veröffentlichungsnummer: WO 2002/000802

(56) Entgegenhaltungen:
- WO-A-99/48618
- US-A- 4 348 440
- US-A- 5 820 958

## Beschreibung

Die vorliegende Erfindung betrifft ein selbstklebendes Band zum Verschließen, Abdichten und Verkleben von Fugen im Hausbau, ein sog. Montageklebeband, welches insbesondere für Fugen in Ecken und Kanten geeignet ist sowie einen Dispenser für ein solches Band. Derartige Klebebänder finden z.B. Anwendung im Hausbau, wenn verschiedene Bauelemente, wie Türen oder Fenster, in eine Hausaußenwand eingesetzt werden und die dabei zwischen dem Element und der Hausaußenwand entstehende Fuge verschlossen werden muß. Solche selbstklebenden Bänder weisen eine Trägerschicht und eine mit ihr verbundene Klebeschicht auf, wobei die Klebeschicht in der Regel mit einer abziehbaren Deckfolie versehen ist.

Ein Problem derartiger selbstklebender Bänder ist die Schwierigkeit in schwer zugänglichen Bereichen das Band dennoch gut abdichtend für die zu verschließende Fuge anzubringen und dabei die Trägerschicht glatt auf den Fugenrandabschnitt aufzukleben, um ein möglichst luft- bzw. feuchtigkeitsdichtes Verschließen dieser Fugen zu erreichen.

Ein weiteres Problem besteht darin, daß bei der Verarbeitung des Bandes die Deckfolie häufig nur schwer von der Klebeschicht entfernbar ist, da an den glatten Schnittkanten des Klebebandes keine Mittel vorgesehen sind, um von dem zu verklebenden Abschnitt des Bandes die Deckfolie anheben und abziehen zu können.

Der Erfindung liegt die Aufgabe zugrunde, ein selbstklebendes Band zum Verschließen, Abdichten und Verkleben von Fugen bereitzustellen, welches auch in schwer zugänglichen Bereichen, wie z.B. Ecken und Kanten, leicht und effektiv verklebbar ist und welches zudem den Verklebevorgang, sprich die Verwendung des Bandes in diesen Bereichen, erleichtert. Eine weitere Aufgabe der Erfindung ist es, die Lagerung, den Transport und die Verarbeitung des selbstklebenden Bandes zu verbessern.

Diese Aufgabe wird mit einem selbstklebenden Band gemäß den in Anspruch 1 genannten Merkmalen bzw. mit einem Dispenser für ein Klebeband nach Anspruch 11 gelöst. Vorteilhafte Ausgestaltungen und Weiterbildungen sind Gegenstand der Unteransprüche.

Die Deckfolie des erfindungsgemäß selbstklebenden Bandes weist in Längsrichtung mindestens einen Schlitz auf, und das Band ist in Querrichtung entlang dieses Schlitzes so auf sich selbst gefaltet, daß mindestens ein Teil der Deckfolie außen angeordnet ist. Auf diese Weise kann die Deckfolie an der Faltung des Bandes zu ihren beiden Seiten hin leicht von der Klebefolie angehoben und abgezogen werden, da die Deckfolie an der Faltung geschlitzt ist und hierdurch die Deckfolienränder jeweils etwas von der Klebeschicht gelöst sind. Die schon vorab etwas gelösten Deckfolienränder sind leicht mit dem Finger auch unter erschwerten Bedingungen greifbar, so daß sich das Problem einer sich nicht lösenden oder schwer abzuziehenden Deckfolie nicht ergibt. Darüber hinaus ist das Band durch die Faltung und die geschlitzte Deckfolie auch leichter zu verarbeiten. Das Band kann in zu verklebenden Eckfugen zunächst mit nur einem Teil der abgezogenen Deckfolie fugenparallel und eckparallel angeklebt werden, und hemach, wenn das Klebeband schon auf einer Seite des Fugenabschnittes angeklebt ist, kann leicht die gegenüberliegende Deckfolienseite abgezogen und das Klebeband vollständig über die Fuge verklebt werden. Durch die Vorfaltung des Klebebandes wird hierbei auch verhindert, daß sich beispielsweise ungewollt Faltungen oder Verwerfungen beim verklebten Band ergeben, welche zu ungewünschten Undichtigkeiten und Problemen in der Weiterverarbeitung des verklebten Fugenbereiches führen.

Bei einem Verkleben des selbstklebenden Bandes über Fugen, welche sich in 90°-Ecken befinden (z.B. Fugen zwischen Fensterrahmen und Hausaußenwänden), gewährleistet das vorgefaltete Band ein sehr präzises Verkleben in die jeweilige Ecke.

Das Band kann getrennt nacheinander mit den gefalteten Längsabschnitten verklebt werden, wodurch verhindert wird, daß das stark haftende Band unsauber verklebt wird und ggfs. durch Abziehen und erneutes Verkleben Klebstoff- oder Klebebandreste sichtbar zurückbleiben. Zudem entfällt ein Anzeichnen von Verklebungslinien, da durch die Vorfaltung das Band sehr genau und gerade in die Ecken angeklebt werden kann und so das Verarbeiten hierdurch wesentlich einfacher wird.

Ein weiterer Vorteil der Vorfaltung liegt in der Zeiteinsparung beim Verarbeiten des selbstklebenden Bandes. Das bisher erforderliche Vorfalten des Bandes Stück für Stück von Hand entfällt vollständig, so daß bei dem Verarbeiten des erfindungsgemäßen Bandes eine Verkürzung der Verklebezeit bis zu ihrer Halbierung erreicht werden kann.

Nach einer vorteilhaften Ausgestaltung der Erfindung ist das Band zweimal geschlitzt und entlang einem der Schlitze in Querrichtung gefaltet. Dies hat den Vorteil, daß die Deckfolie in kleinen Längsabschnitten sukzessive von der Klebeschicht abziehbar ist, so daß das Klebeband noch leichter angesetzt und genauer verklebt werden kann. Zunächst kann in einem sehr kleinen Randabschnitt das Band angeklebt werden, und anschließend kann der nächstliegende Deckfolienabschnitt zur Weiterverklebung des Bandes abgezogen werden. Erst ganz zuletzt muß der letzte Deckfolienabschnitt, beispielsweise der auf der umgeknickten Bandseite, abgezogen werden, welcher bis dahin vor Verschmutzung oder vor dem Verkleben in ungewollter Weise bewahrt wurde.

Nach einer weiteren vorteilhaften Ausgestaltung der Erfindung ist die Trägerschicht aus Papier und/oder Kunststoffolie und die Klebeschicht ein selbstklebender Acrylatkleber. Hierdurch ist das selbstklebende Band auch im gefalteten Zustand unwesentlich dicker gegenüber herkömmlichen Montageklebebändern und es trägt im verklebten Zustand sehr wenig gegenüber dem Klebeuntergrund auf, so daß das Klebeband auch in Bereichen verklebt werden kann, in welchen beispielsweise Bodenbeläge, Tapeten oder Putze anschließend aufgebracht werden sollen. Der Acrylatkleber ist zum einen wegen seiner guten Haftklebeeigenschaft besonders für das Verkleben von Eckfugen geeignet, zum anderen gewährleistet er eine möglichst lang anhaltende Klebewirkung auch bei extremeren Wetter- und Witterungsbedingungen, beispielsweise im Außenbereich.

Nach einer weiteren vorteilhaften Ausgestaltung der Erfindung ist die Trägerschicht so beschaffen, daß sie quer zur Längsrichtung des Bandes von Hand reißbar ist. Hierdurch kann das Band auf einfache Weise in Längsabschnitte zerteilt werden entsprechend der jeweiligen Fugenlänge. Das Band läßt sich somit leichter verarbeiten.

Nach einer weiteren vorteilhaften Ausgestaltung der Erfindung weist die Klebeschicht einen nicht klebenden Mittelstreifen auf und ist die Deckfolie entlang einer Linie zwischen dem nicht klebenden Mittelstreifen und einer angrenzenden Klebeschicht geschlitzt und gefaltet. Für das Verkleben von Fugen zwischen zwei rechtwinklig aufeinanderstoßenden Bauelementen ist dies besonders vorteilhaft, da ein schiefes oder verworfenes Verkleben gerade im Stoßbereich der Bauelemente hierdurch auf einfache Weise verhindert wird. Dennoch gewährleistet das Klebeband ein sicheres Abdichten und Verschließen der Fuge auch über Kanten und Ecken hinweg, da die beiden äußeren Randklebebereiche des Bandes ausreichend breit bemessen sind und so lediglich auf ebenen Flächen aufgeklebt sind.

Nach einer weiteren vorteilhaften Ausgestaltung der Erfindung ist das Band in gefaltetem Zustand zu einer Klebebandrolle aufgerollt. Die an der Faltung offene Klebeschicht kann auf diese Weise nicht mit anderen Klebebandbereichen verkleben, und ein zügiges und einfaches Verarbeiten des Klebebandes ohne vorherige Vorbereitung des Klebevorganges ist möglich. Von der Rolle können auf leichte Weise entsprechende, auf Länge geschnittene Bandstücke entnommen werden und diese unverzüglich auf einer Seite nach Abziehen der Deckfolien verklebt werden. Der Arbeitsgang eines Vorfaltens vor dem Anbringen des Bandes auf die zu verschließende Fuge entfällt; ein Fugenverkleben kann deswegen schneller und kostengünstiger als bisher durchgeführt werden.

Nach einer weiteren vorteilhaften Ausgestaltung der Erfindung ist mindestens an der gefalteten Seite der Rolle eine Zwischenlage vorgesehen. Die Zwischenlage gewährleistet hierbei, daß beim Transport oder bei der Lagerung des aufgerollten und gefalteten Bandes dieses nicht an der offenen Klebeseite der Faltung verkleben kann. Zudem wird hierdurch verhindert, daß Schmutz und dergleichen sich an dieser Seite festsetzen, was die Klebewirkung des Bandes nachteilig beeinflussen würde.

Nach einer weiteren vorteilhaften Ausgestaltung der Erfindung ist das Band auf einer angepaßten Abrolleinrichtung aufgerollt, von welcher es wieder abrollbar ist. Hierdurch entfällt ein umständliches Auspacken und Aufbewahren des selbstklebenden Bandes, da dieses einfach von der Abrolleinrichtung wieder abgerollt werden kann und in den erforderlichen Längenabschnitten von der Rolle abgeschnitten werden kann. Die Abrolleinrichtung vereinfacht aber nicht nur die Entnahme des Bandes, sondern dient auch als Schutz- und Transportverpackung. Darüber hinaus kann die Abrolleinrichtung als Verarbeitungsmittel eingesetzt werden, indem beispielsweise das selbstklebende Band ein Stück von der Einrichtung abgerollt wird, die selbstklebende Folie auf einer der gefalteten Seiten stückweise abgezogen wird und anschließend das Band über eine längere Strecke fortlaufend direkt aus der Rolle auf eine der Fugenseiten abrollend verklebt wird.

Nach einer weiteren diesbezüglichen vorteilhaften Ausgestaltung der Erfindung sind an der gefalteten Seite Mittel vorgesehen, welche ein Verkleben mit und in der Abrolleinrichtung verhindern. Hierzu kann beispielsweise ein dem Rollendurchmesser entsprechendes silikonisiertes Papier seitlich auf das aufgerollte Band aufgelegt sein, von der sich trotz leichten Verklebens mit dem Band an der Faltung dieses leicht wieder entfernen läßt. Hierbei verhindert das silikonisierte Papier ein seitliches Verkleben im Innern der Abrolleinrichtung, indem es leicht klebend an der Seite der Bandrolle mit dieser beim Abrollen bzw. beim Herausziehen auf der Einrichtung mitdreht.

Nach einem weiteren vorteilhaften Aspekt der Erfindung ist ein Dispenser für das zu einer Rolle aufgewickelte selbstklebende Band vorgesehen, welcher die Rolle im wesentlichen umschließt und mindestens einen Auslaßschlitz für das Klebeband aufweist. Der Dispenser hat den Vorteil einer gleichzeitig schützenden Hülle für den Transport bei einer Vereinfachung in der Handhabung und fortlaufenden Verarbeitung des selbstklebenden Bandes. Auch bei sehr staubigen Umgebungsbedingungen wird verhindert, daß Schmutz an die offenliegenden Klebestellen gelangen kann und die Klebekraft vermindert. Das vom Dispenser umschlossene Klebeband kann auf einfache Weise aus dem Auslaßschlitz heraus abgewickelt werden und kontinuierlich (bei langen Klebestellen) oder Stück für Stück (bei kurzen Klebestellen) direkt aus dem Dispenser entnommen und verklebt bzw. abgeschnitten und verklebt werden.

In der Zeichnung ist ein Ausführungsbeispiel des erfindungsgemäßen Montageklebebandes sowie des Montagebanddispensers dargestellt, welche im folgenden unter Bezugnahme auf die Figuren detailliert beschrieben sind:
- Fig. 1: zeigt ein erstes Ausführungsbeispiel eines Montageklebebandes, welches noch nicht auf sich selbst gefaltet ist;
- Fig. 2: zeigt das Montageklebeband gemäß Fig. 1, bei welchem ein Teil auf sich selbst gefaltet ist;
- Fig. 3: zeigt eine prinzipielle Darstellung eines Montagebanddispensers für ein auf sich selbst gefaltetes Montageband gemäß der Erfindung.

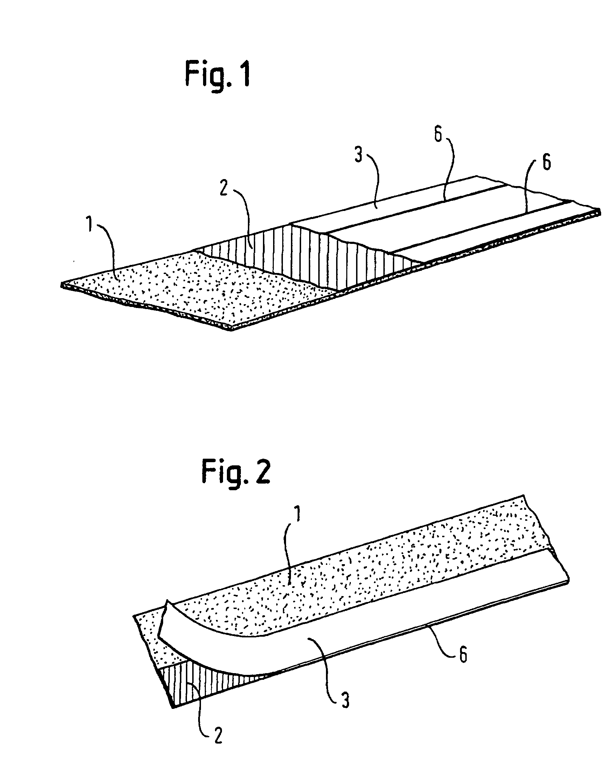

In Fig. 1 ist ein Montageklebeband gezeigt, welches eine Trägerschicht 1, eine Klebeschicht 2 und eine Deckfolie 3 aufweist. Die Deckfolie 3 weist in Längsrichtung des Bandes zwei Schlitze 6 auf. Durch das Vorsehen von zwei längs angeordneten Schlitzen 6 ist es somit möglich, die jeweils außen liegenden Bereiche des Montagebandes auf sich selbst zu falten, wobei die Schlitze 6 dabei so angeordnet sein können, daß entweder die jeweils umgefalteten Bandbereiche aufeinander liegen oder daß die Bandbereiche so auf das Band gefaltet sind, daß die gefalteten Bereiche nicht übereinander angeordnet sind.

In Fig. 2 ist das erfindungsgemäße Montageklebeband dargestellt, welches einen prinzipiellen Aufbau wie gemäß Fig. 1 aufweist; das Montageklebeband weist die Trägerschicht 1, die Klebeschicht 2, welche vorzugsweise aus Acrylatkleber besteht, und die Deckfolie 3 auf. Entlang eines im wesentlichen durchgehenden Schlitzes 6 ist das Montageklebeband auf sich selbst gefaltet. Das Band weist eine Breite von 3 bis 4 cm auf, wobei es auch möglich ist, daß der Schlitz 6 der Deckfolie im wesentlichen in der Mitte des Bandes angeordnet ist und somit das Band hälftig aufeinander gefaltet ist. Gemäß Fig. 2 ist nur ein Teil der gesamten Bandbreite entlang des Schlitzes 6 auf sich gefaltet. Die Klebeschicht 2 besteht aus mehr als 100 g/m² Acrylatklebestoff, vorzugsweise jedoch aus 200 g/m². Das Band ist entlang des Schlitzes 6 in der Deckfolie 3 so gefaltet, daß sich in der Faltung die Deckfolie, welche z.B. aus einem silikonisierten Papier besteht, leicht von der Klebeschicht 2 ablöst und somit ohne Probleme von Hand gefaßt und abgezogen werden kann. Das gesamte Band ist in gefaltetem Zustand zu einer Rolle aufgerollt und seitlich mit Zwischenlagen für den Transport und die Verpackung versehen. Die Zwischenlagen sind beispielsweise silikonisierte Papierrondellen, welche im Durchmesser dem Durchmesser des aufgerollten Bandes entsprechen. Die Papierrondellen sind silikonisiert, damit das Band davon auch bei leichter Verklebung an der offenliegenden Faltung leicht gelöst werden kann. Als Antiverklebemittel können jedoch auch andere dem Fachmann bekannte Mittel vorgesehen werden.

Die Trägerschicht 1 ist mindestens auf ihrer von der Klebeschicht 2 abgewendeten Seite in einer hellen Farbe, wie z.B. weiß oder dergleichen, ausgeführt, wodurch eine mit dem Klebeband abgedichtete Fuge auch mit dünnen Gipsschichten, einer dünnen hellen Farbschicht und dergleichen versehen werden kann, ohne daß die Farbe des Bandes anschließend störend hindurchscheinen oder -treten kann. Das Band ist in diesem Ausführungsbeispiel in einer Breite von 3 bis 4 cm ausgeführt, es versteht sich jedoch von selbst, daß entsprechend den Erfordernissen und der Breite der abzudichtenden Fugen auch breitere, bis maximal 50 cm breite erfindungsgemäße Selbstklebebänder vorgesehen werden können.

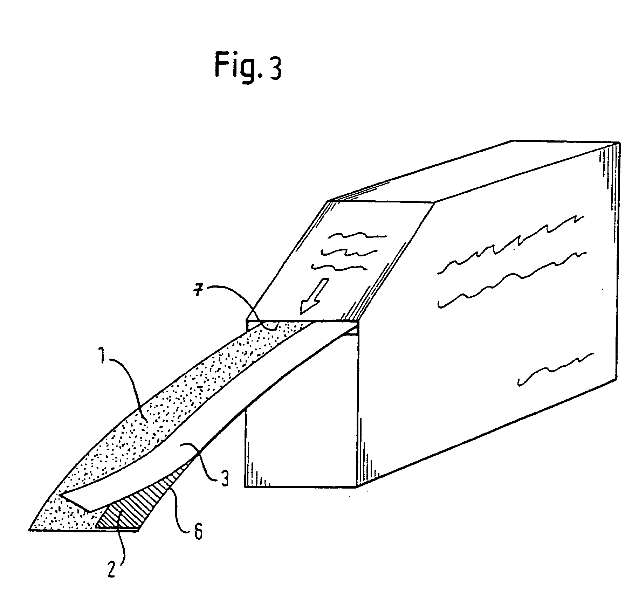

In Fig. 3 ist in prinzipieller Darstellung ein Montagebanddispenser dargestellt, in welchem ein auf sich selbst gefaltetes Montageband gemäß Fig. 2 aufgenommen ist. Ein an einer Stirnseite des Dispensers vorgesehener Auslaßschlitz 7 dient dem Herausführen des Montageklebebandes aus dem Dispenser zum jeweiligen Verbrauch. Der Dispenser ist vorzugsweise aus Karton hergestellt, wobei das Montageklebeband in der Einheit mit dem Montageklebeband zweckmäßigerweise angeboten und einsetzbar ist. Dies hat den Vorteil, daß das Montageklebeband vor Verschmutzung insbesondere an den unmittelbaren Faltlinien geschützt ist, da längs dieser Faltlinien Teile der Klebeschicht frei liegen. Mit dem Dispenser kann somit das Montageklebeband nicht nur zuverlässig transportiert sondern auch auf einer Baustelle sicher und vor Verschmutzung geschützt eingesetzt werden. Der Dispenser kann dabei als Wegwerfartikel ausgebildet sein, d.h. nach vollständig aufgebrauchtem Montageklebeband entsorgt werden oder als Nachfüllbox ausgebildet sein.

## Patentansprüche

1. Selbstklebendes Band zum Verschließen, Abdichten und Verkleben von Fugen im Hausbau, insbesondere von Fugen in Ecken und Kanten, mit einer Trägerschicht auf der Bandoberseite und mit einer auf der Bandunterseite vorgesehenen Klebeschicht, welche mit einer abziehbaren Deckfolie versehen ist,
**dadurch gekennzeichnet, dass**
die Deckfolie in Längsrichtung mindestens einen Schlitz aufweist und das Band in Querrichtung entlang des Schlitzes so auf sich selbst gefaltet ist, dass mindestens ein Teil der Deckfolie außen angeordnet ist.

2. Band nach Anspruch 1, **dadurch gekennzeichnet, daß** es zweimal geschlitzt und entlang einem der Schlitze in Querrichtung gefaltet ist.

3. Band nach Anspruch 1 oder 2, **dadurch gekennzeichnet, daß** die Trägerschicht aus Papier und/oder Kunststoffolie und die Klebeschicht ein selbstklebender Acrylatkleber ist.

4. Band nach einem der vorherigen Ansprüche, **dadurch gekennzeichnet, daß** die Trägerschicht so beschaffen ist, daß sie quer zur Längsrichtung des Bandes von Hand reißbar ist.

5. Band nach einem der vorherigen Ansprüche, **dadurch gekennzeichnet, daß** die Klebeschicht einen nichtklebenden Mittelstreifen aufweist, die Deckfolie entlang einer Linie zwischen nichtklebendem Mittelstreifen und angrenzender Klebeschicht geschlitzt ist und entlang der Linie gefaltet ist.

6. Band nach einem der vorherigen Ansprüche, **dadurch gekennzeichnet, daß** es in gefaltetem Zustand zu einer Klebeband-Rolle aufgerollt ist.

7. Band nach Anspruch 6, **dadurch gekennzeichnet, daß** mindestens an der gefalteten Seite der Rolle eine Zwischenlage vorgesehen ist.

8. Band nach einem der vorherigen Ansprüche, **dadurch gekennzeichnet, daß** es auf einer angepaßten Abrolleinrichtung aufgerollt ist, von welcher es wieder abrollbar ist.

9. Band nach Anspruch 8, **dadurch gekennzeichnet, daß** mindestens an der gefalteten Seite Mittel vorgesehen sind zum Verhindern eines Verklebens mit der Abrolleinrichtung.

10. Band nach einem der vorherigen Ansprüche, **dadurch gekennzeichnet, daß** es in nicht gefaltetem Zustand mindestens 3 bis 4 cm breit ist.

11. Dispenser für ein zu einer Klebeband-Rolle aufgewickeltes, selbstklebendes Band nach einem der Ansprüche 1 bis 10, welcher die Klebeband-Rolle im wesentlichen umschließt und zumindest einen Auslaßschlitz für das Band aufweist.

12. Dispenser nach Anspruch 11, **dadurch gekennzeichnet, daß** als Material Karton eingesetzt ist.

## Claims

1. Self-adhesive tape for closing, sealing and adhering joints in house-building, more especially joints in comers and edges, said tape having a carrier layer on its upper side and an adhesive layer which is provided on its underside and is provided with a removable covering film, **characterised in that** the covering film has at least one slit in the longitudinal direction, and the tape is folded on itself in the transverse direction along the slit so that at least one part of the covering film is disposed externally.

2. Tape according to claim 1, **characterised in that** it has two slits and is folded in the transverse direction along one of the slits.

3. Tape according to claim 1 or 2, **characterised in that** the carrier layer is formed from paper and/or plastics material film, and the adhesive layer is a self-adhesive acrylate glue.

4. Tape according to one of the previous claims, **characterised in that** the carrier layer is such that it is tearable by hand transversely relative to the longitudinal direction of the tape.

5. Tape according to one of the previous claims, **characterised in that** the adhesive layer has a non-adhesive central strip, the covering film is slit along a line between the non-adhesive central strip and the adjacent adhesive layer and is folded along the line.

6. Tape according to one of the previous claims, **characterised in that** it is rolled-up in the folded state to form a roll of adhesive tape.

7. Tape according to claim 6, **characterised in that** an intermediate layer is provided at least on the folded side of the roll.

8. Tape according to one of the previous claims, **characterised in that** it is rolled-up on a suitable rolling apparatus, from which it can be unrolled again.

9. Tape according to claim 8, **characterised in that** means are provided, at least on the folded side, for preventing adhesion to the rolling apparatus.

10. Tape according to one of the previous claims, **characterised in that** it is at least 3 to 4 cm wide in the unfolded state.

11. Dispenser for a self-adhesive tape, which is rolled up to form a roll of adhesive tape according to one of claims 1 to 10, which dispenser substantially surrounds the roll of adhesive tape and has at least one outlet slot for the tape.

12. Dispenser according to claim 11, **characterised in that** cardboard is used as the material.

## Revendications

1. Bande autocollante pour l'obturation, l'étanchéité et le collage de joints dans le bâtiment, en particulier de joints dans des coins et sur des arêtes, avec une couche porteuse sur la face supérieure de la bande et une couche adhésive prévue sur la sous-face de la bande et munie d'une feuille de recouvrement détachable, **caractérisée en ce que** la feuille de recouvrement comporte, dans la direction longitudinale, au moins une fente et la bande est pliée sur elle-même dans la direction transversale le long de la fente, de façon qu'au moins une partie de la feuille de recouvrement soit disposée à l'extérieur.

2. Bande selon la revendication 1, **caractérisé en ce qu'**elle est fendue deux fois et pliée dans la direction transversale le long d'une des fentes.

3. Bande selon la revendication 1 ou 2, **caractérisée en ce que** la couche porteuse est en papier et/ou en feuille en matière plastique et la couche adhésive est un adhésif acrylate autocollant.

4. Bande selon une des revendications précédentes, **caractérisée en ce que** la couche porteuse est conçue de façon à pouvoir être arrachée à la main transversalement à la direction longitudinale de la bande.

5. Bande selon une des revendications précédentes, **caractérisée en ce que** la couche adhésive comporte une bande centrale non adhésive, la feuille de recouvrement est fendue le long d'une ligne passant entre la bande centrale non adhésive et la couche adhésive adjacente et est pliée le long de la ligne.

6. Bande selon une des revendications précédentes, **caractérisée en ce qu'**elle est enroulée à l'état plié sous la forme d'un rouleau de bande adhésive.

7. Bande selon la revendication 6, **caractérisée en ce qu'**au moins une couche intermédiaire est prévue sur le côté plié du rouleau.

8. Bande selon une des revendications précédentes, **caractérisée en ce qu'**elle est enroulée sur un dispositif de dévidage adapté, duquel elle peut à nouveau être dévidée.

9. Bande selon la revendication 8, **caractérisée en ce qu'**au moins sur le côté plié sont prévus des moyens pour empêcher un collage avec le dispositif de dévidage.

10. Bande selon une des revendications précédentes, **caractérisée en ce qu'**elle est large d'au moins 3 à 4 cm à l'état non plié.

11. Distributeur pour une bande autocollante enroulée sous la forme d'un rouleau de bande adhésive selon une des revendications 1 à 10, lequel entoure sensiblement le rouleau de bande adhésive et comporte au moins une fente de sortie pour la bande.

12. Distributeur selon la revendication 11, **caractérisé en ce que** le matériau utilisé est du carton.
